# EUROPEAN PATENT APPLICATION

(11) **EP 0 997 180 A1**
(43) Date of publication of application: **03.05.2000**
(21) Application number: 99308354.2
(22) Date of filing: 22.10.1999
(51) Int. Cl.: B01D 19/04, C11D 3/00, C11D 3/12, C11D 3/37

(54) **Particulate foam control agent**

(30) Priority: 30.10.1998 GB 9823765
(71) Applicant: DOW CORNING S.A., B-7180 Seneffe (BE)
(72) Inventor: Lenoble, Bertrand, 7866 Bois de Lessines (BE); Demaret, Geneviève, 1932 St. Stevens, Woluwe (BE)
(74) Representative: Vandamme, Luc Johan Roger, Dr.

(57) **Abstract**

This invention relates to a particulate foam control agent comprising a silicone antifoam, a zeolite carrier, a binder or encapsulant, wherein said binder is a binder system comprising a first binder which is film forming, soluble in an aqueous alkaline solution and solid at 25°C, a second binder is solid at 25°C and soluble or self-emulsifiable in an aqueous alkaline solution, said first binder being more readily soluble in the aqueous alkaline solution than the second binder. Also claimed are detergent compositions comprising said agents and a method of making them.

## Description

The invention relates to silicone based particulate foam control agents and especially those which are intended for incorporation in powder detergent compositions.

Particulate foam control agents are well known in the art and a consistent effort has been made to improve their foam controlling properties, as is reflected by numerous patent publications. Particulate foam control agents often contain a carrier material for the foam control agent to make the foam control agent into a more substantial solid particulate material and facilitate its handling. The particulate foam control agent can then be post-blended as a powder with the rest of the powder detergent composition.

To overcome the problem of diminishing foam control ability of silicone based foam control agents when stored in powder detergents for prolonged periods of time, solutions have been suggested which include the use of an encapsulating or protective material, intended e.g. to coat or bind the silicone antifoam. The theory is that encapsulation or binding counteracts the unwanted spreading of silicone oil used in the preparation of the silicone antifoam, onto the surrounding powder detergent. Often, the encapsulating or protective materials are used in combination with the carrier material. Proposed binder or encapsulant materials have been described in the art and include materials that are water soluble or water-dispersible and detergent impermeable.

In EP-A-0.336.710 a particulate foam control agent is disclosed which comprises one or more silicone antifoams held in a water soluble, particulate cellulose carrier material. The foam control agent disclosed in EP-A-0.336.710 is capable of providing a delayed release of the silicone antifoam in laundry water towards the end of a short wash cycle, so as to prevent foaming in the subsequent rinse stage. Because the exterior portion of the cellulose carrier granules is relatively free of antifoam, only a limited antifoam activity is discernible in the initial stage of the wash cycle. The delayed release of the antifoam is attributed to the slow dissolution rate of the cellulose carrier material in water. Following dissolution of the exterior part, the interior part of the cellulose granule loaded with the antifoam is exposed to the laundry water, and the antifoam is released into the laundry water.

The ability of the foam control agent disclosed in EP-A-0.336.710 of controlling foam formation however appears to be unsatisfactory for longer lasting wash cycles. This foam control agent has been found to be mainly interesting for controlling foaming towards the rinse cycle of short wash cycles, such as washing conditions, where the wash only lasts for a short time, e.g. approximately 12 minutes on average.

There is thus a need to find a foam control agent with improved foam control properties, which is capable of controlling foam formation during a substantial part of the wash cycle.

After an analysis of the problem presented by the foam control agent known from the art outlined above, we have found that the problem of the unsatisfactory foam control must not be attributed to the presence of an insufficient amount of the antifoam in the foam control agent, nor to an insufficient efficacy of the antifoam to control the foam level. In the known foam control agent, the antifoam often appears to be in excess to ensure that sufficient antifoam is present for suppressing foam formed by the detergent.

On the contrary, it has been found that the problem of diminishing foam controlling ability of the known foam control agent, must rather be attributed to a decreasing activity of the antifoam with time, after it has been dissipated into the wash solution. It has appeared that once the interior of the particles of the known foam control agent is exposed to the wash solution, the majority of the antifoam is released from the foam control agent in one go. After having been dissipated into the wash solution for a certain period of time, the activity of the antifoam starts decreasing. At the time the wash solution is still generating foam, the ability of the antifoam to surppres foam is decreasing to such an extent that it may become unsatisfactory. The problem of insufficient foam control thus rather lies in the fact that the activity of the antifoam has decreased such that it may become insufficient, whereas the detergent is still active, generating foam, and the wash solution still contains foam.

There is thus a need more specifically, to find a foam control agent which is capable of overcoming the above described discrepancy between the period wherein the detergent is active to generate foam, and the period wherein the foam control agent is active and capable of controlling foam formation.

We have now found that this can be improved with a particulate foam control agent comprising a silicone antifoam, a zeolite carrier, a surfactant and a binder or encapsulant, wherein said binder is a binder system comprising a first binder which is film forming, soluble in an aqueous alkaline solution and solid at 25°C, and a second binder which is solid at 25°C and soluble or self-emulsifiable in an aqueous alkaline solution, said first binder being more readily soluble in the aqueous alkaline solution than the second binder.

Whilst not wishing to be bound by any theory, it is believed that in a particulate foam control agent according to the invention, part of the antifoam contained in the foam control agent is protected by the first binder, whereas part of the antifoam contained in the foam control agent is protected by the second binder. Depending on the compatibility of the first and the second binder material, it is possible that part of the antifoam is protected by both first and second binder. Following exposure of the foam control agent to an aqueous alkaline wash solution, the protective nature of the first binder is disrupted at a relatively earlier stage. As a result of this disruption, antifoam becomes accessible to a wash solution and is dissipated therein at a relatively earlier stage. In that way foam formation can be controlled at said relatively early stage of a wash cycle. The second binder which shows a lower solubility in the aqueous alkaline solution, is only disrupted after a relatively longer contact time with the wash solution. As a consequence, part of the antifoam protected by the second binder becomes accessible to the wash solution and can be released therein only at a relatively later stage.

It is thus ensured that more active antifoam can be dissipated in wash solution after the activity of the antifoam which was released earlier has decreased to some extent. Thus, a foam control agent can be obtained which is capable of controlling foam formation during a substantial part of the period wherein the detergent is able to generate foam.

In the foam control agent known from the art, the binder mainly functions as a means for overcoming the problem of an unwanted ab- or adsorption of the antifoam by the carrier, and an unwanted spreading of the silicone antifoam onto the powder detergent which would reduce the concentration of the antifoam in the foam control agent. In the foam control agent of the present invention the binder system fulfils the additional function of controlling the stage at which the antifoam is released from the foam control agent, becomes accessible to the wash solution and is dissipated therein.

If it is desired that the antifoam is dissipated into the wash solution even more gradually, in multiple stages, the binder system may comprise one or more additional binder materials. Thereby the binder materials are preferably selected with increasing degrees of solubility or ease of self-emulsification in the aqueous alkaline solutions to complement each other, so that the stage at which the individual binders release antifoam, varies to some extent. In that way it can be achieved that a plurality of doses of active antifoam is released into the wash solution, at different times. The number of binder materials can be adapted by the man skilled in the art, depending a.o. on the desired release properties, release timing, the extent to which a uniform control of the foam level during the wash cycle is desired and the nature of the detergent.

The foam control agent of this invention not only presents the advantage of allowing the foam formation to be controlled and decreased over a longer period of time during the wash cycle, but even allows a reduced foam generation in the subsequent rinse cycle. A reduced amount of foam aids in rinsing the detergent from laundered articles as it can be more easily and thoroughly removed from the laundered articles when the detergent is present as a solution, rather than as a foam.

Surprisingly we have also found that by the presence of the above described binder system which comprises at least two binders, the overall amount of antifoam which needs to be used to control foam formation during a substantial part of a wash cycle, can be decreased compared to the use of prior art foam control agents. Often, a reduction of the required amount of antifoam of up to 40 % can be achieved, depending on the detergent formulation. This is advantageous, especially as the trend of using more environmentally friendly types of surfactants tends to result in detergents which are generally more foaming. It is also advantageous in view of the trend of using compact and super compact types of powders which contain concentrated detergents, wherein the volume taken by the antifoam relatively to the rest of the formulation should be kept to a minimum.

The difference in the stage at which the first and the second binder become disrupted by the wash solution and release antifoam can be obtained by using for example binder materials with a different degree of water solubility or solubility in alkaline aqueous solutions. Other characteristics could be combined with the solubility difference, such as the use of materials with a difference in dispersibility in the aqueous alkaline solution, materials with a different melting point, materials which form protective coatings of a different thickness, or any combination thereof, so that e.g. the kinetics of dissolution or dispersion of the binder will additionally influence the release time of the antifoam. Suitable means for altering physical characteristics of one or more of the binder materials to control their release rate include solubility adjustment by ionic strength, hydrophobicity adjustment, selected particle size by varying the thickness of the binder coating, etc.

The materials that are used as first and second and/or further binder material in the foam control agent of this invention may be substantially compatible with each other, in the sense that they can mix with each other or cover one another. Preferably however they show a limited compatibility or are almost completely incompatible with each other, so as to obtain a foam control agent wherein only part of antifoam is protected by one binder, part of the antifoam is protected by the second binder, and if so desired, part of the antifoam is protected by any further binders. Thereby it is possible that part of the antifoam is simultaneously protected by two or more binder materials.

The weight ratio of the first, second and/or any further binder materials in the foam control agent may vary within wide ranges, and will be adapted by the man skilled in the art depending on the required release properties or release timing. It is however preferred that the ratio of the more soluble binder over the less soluble one will be at least 1.5/1.

Materials that are suitable for use as a first, second and further binder materials may vary widely and may be any of the known or proposed binder or encapsulant materials described in the art, of protecting foam control agents in powder detergent compositions against deterioration upon storage, in any combination, provided they fulfil the criteria set out above.

Examples of suitable inorganic binder materials include alkali and alkaline earth metal sulphates, silicates, carbonates, including calcium carbonate, sodium silicate with SiO₂: Na₂O ratio from 1.6 : 1 to 3.4 : 1; preferably 2.8 : 1, applied as an aqueous solution to give a level of from 2% to 10%, (normally from 3% to 5%) of silicate solids by weight of carbonate. Magnesium silicate can also be included in the coating. Any inorganic binder may be combined with an organic binder.

Suitable organic binders include C₁₀-C₂₀ alcohol ethoxylates containing from 5 - 100 moles ethylene oxide per mole of alcohol and more preferably the C₁₅-C₂₀ primary alcohol ethoxylates containing from 20 - 100 moles of ethylene oxide per mole of alcohol. Other suitable binder materials include certain polymeric materials, e.g. polyvinylpyrrolidones with an average molecular weight of from 12,000 to 700,000 and polyethylene glycols (PEG) with an average molecular weight of from 600 to 10,000, copolymers of maleic anhydride with ethylene, methylvinyl ether or methacrylic acid, the maleic anhydride constituting at least 20 mole percent of the polymer, propylene glycol, C₁₀-C₂₀ mono- and diglycerol ethers, C₁₀-C₂₀ fatty acids, cellulose derivatives such as methylcellulose, carboxymethyl-cellulose, ethyl hydroxyethylcellulose, hydroxyethyl-cellulose, and homo- or co-polymeric polycarboxylic acids or their salts.

Additional suitable binder materials have been suggested in patent applications GB 1 523 957, WO 95/28468, EP 13 28, EP 206 522 and EP 201 721. These include waxes having a melting point in the range from 55 to 100°C, emulsifying agents, ethoxylated waxes, gelatine, cellulose, fatty acids, non-ionic surfactants exemplified by ethoxylated aliphatic C₁₂₋₂₀ alcohols with 4 to 20 oxyethylene groups, ethoxylated alkylphenols, fatty acids, amides of fatty acids, thio alcohols and diols, all having 4 to 20 carbon atoms in the hydrophobic part and 5 to 15 oxyethylene groups, materials which are impervious to oily antifoam active substance when in the dry state, yet capable of disruption on contact with water, for example materials with a waxy nature which form an interrupted coating that will allow water to pass through under wash conditions, water soluble sugars, fatty acids or fatty alcohols having a carbon chain of from 12 to 20 carbon atoms and a melting point of from 45 to 80°C, for example stearic acid or stearyl alcohol.

A particularly preferred binder is a polycarboxylate-type binder or encapsulant, more preferably a polycarboxylate-type binder which has a pH of 5 or less when dissolved in water. An improved silicone foam control agent may be obtained with such binder, which has better powder characteristics, and an improved storage stability.

So-called polycarboxylate materials have been described in the art, and have the advantage that, as zeolites, they are useful ingredients in detergent compositions. Polycarboxylate materials are known as dispersing agents in powder detergents and are water soluble polymers, copolymers or salts thereof. They have at least 60% by weight of segments with the general formula 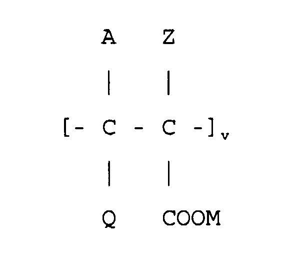 wherein A, Q and Z are each selected from the group consisting of hydrogen, methyl, carboxy, carboxymethyl, hydroxy and hydroxymethyl, M is hydrogen, alkali metal, ammonium or substituted ammonium and v is from 30 to 400. Preferably A is hydrogen or hydroxy, Q is hydrogen or carboxy and Z is hydrogen. Suitable polymeric polycarboxylates include polymerised products of unsaturated monomeric acids, e.g. acrylic acid, maleic acid, maleic anhydride, fumaric acid, itaconic acid, aconitic acid, mesaconic acid, citraconic acid and methylenemalonic acid. The copolymerisation with lesser amounts of monomeric materials comprising no carboxylic acid, e.g. vinylmethyl, vinylmethylethers, styrene and ethylene is not detrimental to the use of the polycarboxylates in the foam control agents of the present invention. Depending on the type of polycarboxylate this level can be kept low, or levels can be up to about 40% by weight of the total polymer or copolymer.

Particularly suitable polymeric polycarboxy-lates are polyacrylates with an average viscosity at 25°C in mPa.s from 50 to 10,000, preferably 2,000 to 8,000. The most preferred polycarboxylate polymers are acrylate/maleate or acrylate/fumarate copolymers or their sodium salts. Molar mass of suitable polycarboxylates may be in the range from 1,000 to 500,000, preferably 3,000 to 100,000, most preferably 15,000 to 80,000. The ratio of acrylate to maleate or fumarate segments may vary from 30:1 to 2:1. Polycarboxylates may be supplied in powder form or liquid forms. They may be liquid at room temperature or may be supplied as aqueous solutions. The latter are preferred as they facilitate the manufacture of the foam control agents according to the invention with conventional spray applications.

Particularly suitable materials for use as a binder are surface active materials, preferably detergent-active materials. It is preferred that the surfactant is soluble or dispersible in an aqueous surfactant solution. More preferably the surfactant is water soluble or water dispersible. Suitable surfactants have been described in a number of publications and are generally well known in the art. It is preferred that the surfactant is able to emulsify a siloxane material at least to some extent in an aqueous system, more preferably the surfactant is a good emulsifier of a siloxane material, especially of siloxane materials which are used for making the silicone antifoam. Suitable materials are given hereunder in the discussion of the surfactants.

In the particulate foam control agent of this invention, the first of the binders is most preferably chosen from the group comprising polycarboxylates, starch derivatives, polyvinyl alcohol and polyvinyl pyrollidone. Other binders are preferably selected from the above or from polysiloxane polyoxyalkylene copolymers, ethoxylated waxes and alcohol ethoxylates, preferably C₁₀-C₂₀ alcohol ethoxylates containing 5-100 moles of ethyleneoxide per mole of alcohol, more preferably, C₁₅-C₂₀ alcohol ethoxylates containing 20-100 moles of ethylene oxide per mole of alcohol.

Another essential ingredient of the particulate foam control agent of this invention is a surfactant. Suitable organic surfactants for use as surfactant and/or binder in the present invention may be anionic, cationic, non-ionic or amphoteric materials. Mixtures of one or more of these may also be used. Suitable anionic organic surfactants include alkali metal soaps of higher fatty acids, alkyl aryl sulphonates, for example sodium dodecyl benzene sulphonate, long chain (fatty) alcohol sulphates, olefin sulphates and sulphonates, sulphated monoglycerides, sulphated esters, sulphosuccinates, alkane sulphonates, phosphate esters, alkyl isothionates, sucrose esters and fluoro-surfactants. Suitable cationic organic surfactants include alkylamine salts, quaternary ammonium salts, sulphonium salts and phosphonium salts. Suitable nonionic surfactants include condensates of ethylene oxide with a long chain (fatty) alcohol or (fatty) acid, for example C₁₄₋₁₅ alcohol, condensed with 7 moles of ethylene oxide (Dobanol®45-7), condensates of ethylene oxide with an amine or an amide, condensation products of ethylene and propylene oxides, fatty acid alkylol amide and fatty amine oxides. Suitable amphoteric organic detergent surfactants include imidazoline compounds, alkylaminoacid salts and betaines. It is more preferred that the organic surfactants are nonionic or anionic materials, preferably with a HLB value of at least 7. Of particular interest are surfactants which are environmentally acceptable.

More preferred organic surfactants are alkyl sulphates, alkyl sulphonates, primary alkyl ethoxylates and alkylpoly-glucosides or derivatives thereof. Many of these surfactants are commercially available. Specific examples of them are illustrated in the examples of the present specification. It is particularly useful to emply organic surfactants which have a melting point which is in the range of or higher than room temperature (i.e. 18°C), as these surfactants will additionally improve the stability of the foam control agent during storage.

Suitable surfactants for use in the foam control agent according to the invention include organopolysiloxane polyoxyalkylene copolymers, which are preferably soluble or dispersible in an aqueous surfactant solution. More preferably they are water soluble or water dispersible copolymers. Suitable copolymers have been described in a number of publications, for example in Patent Specifications G.B. 1 023 209, G.B. 1 554 736, G.B. 2 113 236, G.B. 2 119 394, G.B. 2 166 750, G.B. 2 173 510, G.B. 21 175 000, E.P. 125 779, E.P. 212 787, E.P. 298 402 and E.P. 381.318, and are generally well known in the art.

Suitable organopolysiloxane polyoxyalkylene copolymers have a number of units X of the general formula R⁴ₚ-Si-O_{4-p/2} and at least one unit Y of the general formula R⁵R⁶_{q}-Si-O₃₋ _{q/2}. R⁴ denotes a monovalent hydrocarbon group having up to 24 carbon atoms, a hydrogen atom or a hydroxyl group, preferably a group R⁶, which denotes an aliphatic or aromatic hydrocarbon group having up to 24 carbon atoms, preferably up to 18 carbon atoms.

Units X and Y may be the majority of units in the copolymer, but preferably they are the only units present in the copolymer. They may be linked to each other in a way to form random copolymers or block copolymers. The units Y may be distributed along the siloxane chain of the copolymer or they may be placed at one or both ends of such siloxane chain.

It is preferred that the organopolysiloxane polyoxyalkylene copolymer has a substantially linear siloxane backbone, i.e. that the value of p is 2 and q is 1 for the majority of units present in the copolymer. This will result in a so-called ABA type polymer or in a rake type polymer.

More preferred are those copolymers which have the general formula 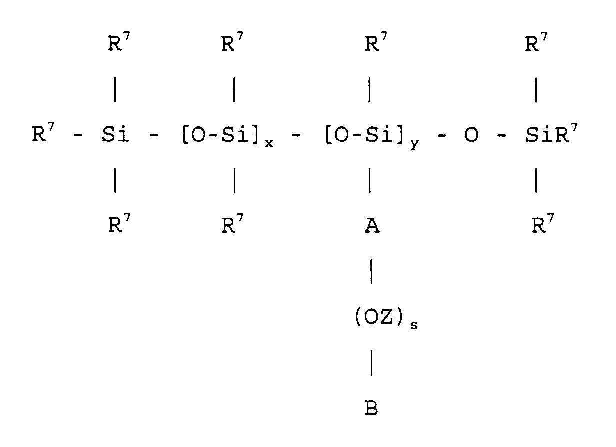 R⁷ in these more preferred copolymers may denote any alkyl or aryl group having up to 18 carbon atoms, more preferably 6. Z preferably denotes a dimethylene group for at least half of all Z groups present in the copolymer, the other half being isopropylene groups. The value of x may be 0 or an integer, preferably from 1 to 500, and the value of y may be any integer, preferably a value of from 1 to 500. x, y and s are chosen thus that the copolymer is either fully soluble or is disper-sible in water or preferably in an aqueous surfactant solution.

Organopolysiloxane polyoxyalkylene copoly-mers which are useful in foam control agents of the invention are known in the art, have been described in a number of patent specifications as described above, and many of them are commercially available. They may be made by a variety of methods which have also been described or referenced in the above mentioned specifications, which are hereby included by reference. One particularly useful way of making suitable copolymers is by reaction of polyorganosiloxanes having silicon-bonded hydrogen atoms with appropriate allylglycols (allyl-polyoxyalkylene polymers) in the presence of a noble metal catalyst. A hydrosilylation reaction will ensure the addition reaction of the allyl group to the silicon atom to which the hydrogen atom was bonded.

The foam control agent according to this invention also comprises a silicone antifoam. Silicone antifoams as used in the foam control agent of this invention are known materials and many have been described in patent specifications, including those referred to herein. Silicone antifoams are foam regulating compositions which comprise a liquid organopolysiloxane polymer and a filler particle, the surface of which has been rendered hydrophobic. Preferably, the foam control agent of this invention comprises only one type of antifoam. This is sufficient since control of foam formation during a substantial part of the wash cycle is achieved by the release of the antifoam at different times during a wash cycle.

Full description of all options of liquid organopolysiloxanes is not included but can be found in the many publications, including European application EP 0 578 424. Preferred liquid organopolysiloxanes are branched or higher viscosity siloxanes (i.e. above 12,500 mm²/s at 25°C) especially the branched siloxanes, as they show an improved ability to control foam in aqueous surfactant solutions.

Preferably they are linear or branched polymers having a structure according to the general formula 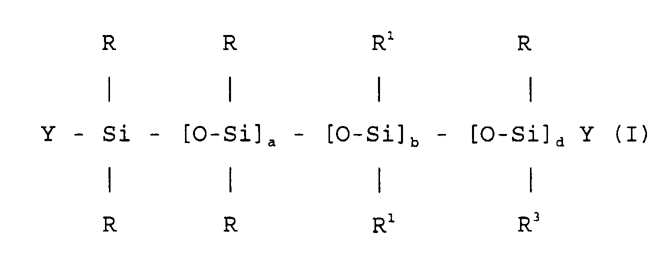 In formula (I), R denotes a monovalent hydrocarbon group having from 1 to 8 carbon atoms, preferably 1 to 4 carbon atoms, R¹ denotes a group R, a hydroxyl group or a group 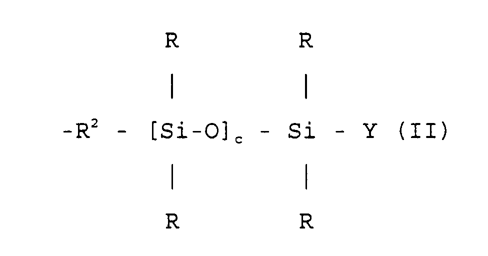 wherein R² denotes a divalent hydrocarbon, hydrocarbonoxy or siloxane group or oxygen and Y denotes a group R or a hydroxyl group, R³ denotes a C₉₋₃₅ alkyl group, a, b, c and d have a value of 0 or an integer, provided at least one of a and b is an integer and the total of a+b+c+d has a value such that the viscosity of the organopolysiloxane polymer at 25°C is at least 50 mm²/s, preferably at least 500 mm²/s. The organopolysiloxane polymers may be linear, in which case R¹ denotes R or a hydroxyl group. It is preferred for the linear organopolysiloxanes that Y denotes a group R and that b = 0. More preferred are those linear polymers wherein d = 0 and wherein at least 80% of all R groups denote an alkyl group having from 1 to 4 carbon atoms, most preferably methyl. It is most preferred that the linear organopolysiloxanes are trimethylsiloxane end-blocked polydimethylsiloxanes. The preferred viscosity of the linear organopolysiloxanes is from 500 to 100,000 mm²/s, more preferably 1000 to 60,000 mm²/s at 25°C.

Organopolysiloxanes which are not linear are also known in the art. The preferred non-linear materials are those having branching in the siloxane chain. These polymers have a structure according to Formula (I), wherein b has a value of at least 1 and R² is preferably a divalent siloxane group or an oxygen atom. Particularly preferred siloxane groups R² are small three-dimensional siloxane resin particles which may have a number of pending siloxane polymer units. Branched siloxanes are known and examples of them have been described together with a method of making them in a number of patent specifications, e.g. GB 639 673, EP 31 532, EP 217 501, EP 273 448, DE 38 05 661 and GB 2 257 709.

Filler particles which are useful in the antifoams for the present invention are also well known and have been described in many publications. They are finely divided particulate materials including silica, fumed TiO₂, Al₂O₃, zinc oxide, magnesium oxide, salts of aliphatic carboxylic acids, reaction products of isocyanates with certain materials, e.g. cyclohexylamine, alkyl amides, for example ethylene or methylene bis stearamide. Most preferred are silica particles with a surface area as measured by BET measurement of at least 50 m²/g. Suitable silica particles may be made according to any of the standard manufacturing techniques for example thermal decomposition of a silicon halide, decomposition and precipitation of a metal salt of silicic acid, e.g. sodium silicate and a gel formation method. Suitable silicas for use in the antifoams include therefore fumed silica, precipitated silica and gel formation silica. The average particle size of these fillers may range from 0.1 to 20µm, but preferably is from 0.5 to 2.5µm.

Where the filler particles are not hydrophobic by themselves their surface is rendered hydrophobic in order to make the antifoam sufficiently effective in aqueous systems. Rendering the filler particles hydrophobic may be done prior to or after dispersing the filler particles in the liquid organopolysiloxane. This can be effected by treatment of the filler particles with treating agents, e.g. reactive silanes or siloxanes, for example dimethyldichlorosilane, trimethylchlorosilane, hexamethyl-disilazane, hydroxyl end-blocked and methyl end-blocked polydimethyl-siloxanes, siloxane resins, fatty acids or a mixture of one or more of these. Fillers which have already been treated with such compounds are commercially available from many companies, e.g. Sipernat® D10 from Degussa. The surface of the filler may alternatively be rendered hydrophobic in situ, i.e. after the filler has been dispersed in the liquid organopolysiloxane component. This may be effected by adding to the liquid organopolysiloxane prior to, during or after the dispersion of the filler therein, the appropriate amount of treating agent of the kind described above and heating the mixture to a temperature above 40°C. The quantity of treating agent to be employed will depend for example on the nature of the agent and the filler and will be evident or ascertainable by those skilled in the art. Sufficient should be employed to endow the filler with least a discernible degree of hydrophobicity. The filler particles are added to the organopolysiloxane in an amount of from 1 to 25% by weight of the antifoam, preferably from 1 to 20%, most preferably from 2 to 8%.

The zeolite which is used in the foam control agent according to the invention may be any of those aluminosilicate materials which are known to be beneficial in powder detergent compositions and have been described in a number of patent specifications. Zeolites are used as cation exchange components. Suitable zeolite materials include particularly those which are known as Zeolite A and have an average formula (Na₂O)ₘ.Al₂O₃. (SiO₂)ₙ) . (H₂O)ₜ, wherein m has a value of from 0.9 to 1.3, n a value of from 1.3 to 4.0 and t a value of from 1 to 6. Such zeolites are known ingredients in powder detergent compositions. Suitable zeolites may be crystalline or amorphous aluminosilicates and have been described in particular in EP 192 442 and EP 329 842 and in the patent specifications which are referred to on page 2 of the latter specification. In addition to the zeolite carrier material, other carrier materials may also be used, which may be organic or inorganic, preferably components of detergent compositions.

In a preferred embodiment of this invention, the foam control agent comprises particles having deposited thereon both the first and the second binder, and if so desired any further binder materials.

The foam control agent of this invention preferably comprises from 45 to 99 parts by weight of zeolite, from 0.001-30 parts by weight of silicone antifoam, from 0.1 to 500% of surfactant by weight based on the weight of silicone antifoam and from 1 to 30 parts by weight of two or more binder materials.

There is also provided in the present invention a detergent composition in powder form which comprises 100 parts by weight of a detergent component and a sufficient amount of a foam control agent to give 0.005 to 2 parts by weight of the silicone antifoam comprised in the foam control agent.

Suitable detergent components are well known in the art and have been described in numerous publications. The components comprise an active detergent, organic and/or inorganic builder salts and other additives and diluents. The active detergent may comprise organic detergent surfactants of the anionic, cationic, non-ionic or amphoteric type, or mixtures thereof. Suitable anionic organic detergent surfactants include alkali metal soaps of higher fatty acids, alkyl aryl sulphonates, for example sodium dodecyl benzene sulphonate, long chain (fatty) alcohol sulphates, olefine sulphates and sulphonates, sulphated monoglycerides, sulphated esters, sulphosuccinates, alkane sulphonates, phosphate esters, alkyl isothionates, sucrose esters and fluoro-surfactants. Suitable cationic organic detergent surfactants include alkylamine salts, quaternary ammonium salts, sulphonium salts and phosphonium salts. Suitable non-ionic detergent surfactants include condensates of ethylene oxide with a long chain (fatty) alcohol or (fatty) acid, for example C₁₄₋₁₅ alcohol, condensed with 7 moles of ethylene oxide (Dobanol® 45-7), condensates of ethylene oxide with an amine or an amide, condensation products of ethylene and propylene oxides, fatty acid alkylol amide and fatty amine oxides. Suitable amphoteric organic detergent surfactants include imidazoline compounds, alkylaminoacid salts and betaines. Examples of inorganic components are phosphates, polyphosphates, silicates, carbonates, sulphates, oxygen releasing compound such as sodium perborate and other bleaching agents and alumino-silicates, e.g. zeolites. Examples or organic components are anti-redeposition agents such as carboxymethylcellulose (CMC), brighteners, chelating agents such as ethylene diamine tetra-acetic acid (EDTA) and nitrilotriacetic acid (NTA), enzymes and bacteriostats. Other optional components include colorants, dyes, perfumes, softeners, clays, some of which may be encapsulated. Materials suitable for the detergent component are well known to the person skilled in the art and are described in many text books as well as other publications.

The present invention also relates to a method for the preparation of the above described foam control agent. The method of this invention comprises preparing a mixture of a silicone antifoam, a surfactant, a first and a second binder material, and depositing said mixture onto a zeolite carrier, whereby the silicone antifoam is not deposited onto the zeolite surface prior to the deposition of the surfactant. In the method of the invention it is important that the silicone antifoam is not deposited onto the zeolite surface prior to the deposition of the surfactant to prevent undesired absorption of the surfactant by the zeolite. It is preferred to make a premix of the silicone antifoam, the surfactant and the binder materials, which may be done by any of the known methods, and to deposit the premix onto the zeolite surface. The premix can be made by simply mixing all the ingredients together, preferably with reasonable shear or high shear. Where one or more ingredients are solid or waxy materials, or materials of high viscosity, it may be beneficial to heat the mixture to melt or reduce the working viscosity of the mixture. Alternatively the premix of the components may be diluted with a solvent, e.g. a low viscosity siloxane polymer, cyclic siloxane polymer, organic solvent or even by making a dispersion in water.

Although it is most preferred to mix all ingredients before depositing them onto a zeolite carrier, it is possible to deposit each of the ingredients independently onto the zeolite, in which case it is important that the silicone antifoam is not deposited onto the zeolite prior to the surfactant. This is also important if a mixture of part of the ingredients is deposited separately from the remaining ingredients. For example the surfactant may be deposited first, followed by deposition of a mixture of the silicone antifoam with the first, second and possibly further binders. Alternatively, the silicone antifoam may be mixed with the surfactant and deposited onto the foam control agent prior to depositing the binders. It is less beneficial to make a mixture of the surfactant with the binders and to deposit this prior to the deposition of the silicone antifoam.

It is also possible, although less preferred, to make a first premix of a surfactant and a binder material and to deposit this first premix onto the surface of a zeolite carrier, and to make a second premix of a surfactant and another binder material and to deposit this second premix on a zeolite carrier. The two parts of the foam control agent would then be mixed together to provide a foam control agent according to invention.

Depositing the mix onto zeolites can be done in a number of ways. Conventional procedures of making powders are particularly useful for making the particulate foam control agent.

The deposition of the components onto the zeolite may be done by pouring the mixture into the mixer as well as by spraying. One particularly useful way of depositing the components onto the zeolite is by spraying one or more of these onto the zeolite, which may be present in a drum mixer, fluidised bed etc. This may be done at room temperature or at elevated temperature, which is particularly useful if one wants to evaporate some or all of the solvent during the process. In one process the zeolite powder is mixed with the premix of all the other components, e.g. in a high shear mixer, e.g. Eirich® pan granulator, Schugi® mixer, Paxeson-Kelly® twincore blender, Loedige® ploughshare mixer, Aeromatic® fluidised bed granulator or Pharma® type drum mixer.

A particularly useful method includes the use of small amounts of water. It is preferred to keep the amount of water used small, i.e. not exceeding 50% by weight of the amount of zeolite used in the method. The water can be introduced as an additional ingredient or by providing the surfactant as a solution or dispersion.

The method of the invention preferably uses from 0.001-30 parts by weight of silicone antifoam and from 45 to 99 parts by weight of zeolite. Preferably 1 to 20 parts of silicone antifoam are used, more preferably 5 to 15 parts by weight.

The zeolites are used in an amount of from 45 to 99 parts by weight of the foam control composition for every 0.001-30 parts of the silicone antifoam. Preferably they comprise about 45 to 99% by weight of the total weight of the components mentioned as forming part of the foam control agent, i.e. the silicone antifoam, the zeolite, the binder and the surfactant, more preferably 60 to 85%.

Thus use of 0.1 to 500% of surfactant by weight based on the weight of the silicone antifoam is chosen for efficiency reasons as well as to minimise the amount of material which is to be introduced in the powder detergent which is not necessarily beneficial to the cleaning efficiency of the detergent composition. It is more preferred to use 2 to 200% of the surfactant by weight based on the weight of the silicone antifoam. Most preferably the amount of surfactant used is from 20 to 150% of the silicone antifoam. It was found that the presence of surfactants also may improve the foam control efficiency, especially where the silicone antifoam has a relatively high viscosity or where a wash cycle is performed at lower temperatures, e.g. 40°C or below.

Foam control agents made according to the method of the invention are useful in any powdered surfactant composition where foam levels need to be controlled, e.g. in laundry detergents and in dishwasher detergents.

The invention is further illustrated in the examples given below. All parts and percentages are given by weight unless otherwise indicated.

### Comparative Example I

A particulate foam control agent was prepared by mixing approximately 10.1 parts of a Sokalan® CP5 fully neutralised polycarboxylate copolymer binder material provided by BASF, which has a molecular weight of about 70,000, with approximately 2.5 parts of a surfactant of a silicone polyether, namely an organopolysiloxane polyoxyalkylene copolymer with about 10% of the siloxane units having a pending polyoxyalkylene group, having about 20 units of each oxyethylene and oxy-propylene groups and approximately 12 parts of a silicone antifoam, comprising a branched polymethylsiloxane polymer and 5 % hydrophobic silica having been prepared according to the teaching of EP 217 501.

The mixture was prepared by pure mechanically mixing the antifoam, the binder and the surfactant together using a lab blender equipped with a shaft. The mixture was done until the phases were homogeously blended. The liquid was then poured very slowly into a drum mixer in which approximately 76 parts of a zeolite Wessalith ® P, a zeolite manufactured by Degussa, were placed. The mixture was stirred continuously until a particulate material was obtained. The agglomerated material was dried in a fluidised bed.

### Example 1 Preparation of a mixture of two particulate foam control agents

A first particulate faster release foam control agent was prepared according to comparative example I.

A second slower release particulate foam control agent was prepared using as a second binder material 100 parts of Emulon (BASF), which is a wax binder comprising 80% of alcohol ethoxylate and 20% of fatty acid, 5 parts of dodecyl benzene sulphonic acid as a surfactant, and 100 parts of silicone antifoam. The mixture was heated to the liquid state, 90 parts thereof were poured onto 200 parts of zeolite Wessalith P®. Thereafter 2 parts of the first foam control agent were mixed with 1 part of the second foam control agent to provide a foam control agent according to invention.

### Example 2 Preparation of a foam control agent with the binders deposited onto the same carrier

A particulate foam control agent was prepared by mixing approximately 3.28 parts of Sokalan® CP5 35% neutralised as a first binder, with approximately 12.63 parts of polyethylene glycol PEG 6000 (BASF) as a second binder, and approximately 2.21 parts of Neopon LOS, which is a fatty alcohol ethoxylate sulphate supplied by Wittco as a surfactant, approximately 10.67 parts of a silicone antifoam, comprising a branched polymethylsiloxane polymer and 5 % hydrophobic silica having been prepared according to the teaching of EP 217 501.

The mixture was prepared by pure mechanically mixing the antifoam and the binder materials together using a lab blender equipped with a shaft. The mixture was done until the phases were homogeously blended. The liquid was then poured very slowly into a drum mixer in which approximately 67 parts of a zeolite Wessalith ® P, a zeolite manufactured by Degussa, with the zeolite was placed. The mixture was stirred continuously until a particulate material was obtained. The agglomerated material was dried in a fluidised bed.

### Example 3

A particulate foam control agent was prepared as is described in example 2, except that as a first binder material, use is made of approximately 4.63 parts of Sokalan CP 5 35% neutralised, as a second binder material use is made of approximately 10.36 parts of PEG 6000, and approximately 2.08 parts of Neopon LOS, which is a fatty alcohol ethoxylate sulphate supplied by Wittco are used as a surfactant.

### Preparation of the Powder Detergent Composition

Several types of commercially available powder detergent composition were mixed with the foam control agents obtained from the above described examples: powder type A contained 5-15% anionic surfactant and 5 to 15% non-ionic surfactants, powder type B contained 5-10% anionic surfactant and 5% non-ionic surfactant, powder type C contained 20% anionic surfactant. The Powder Detergent Compositions were prepared by adding a sufficient amount of the foam control agent of the above described Examples to 100 g of the detergent composition, to give the amounts of the silicone antifoam in the detergent composition as indicated in table 1 and table 2. The antifoam content has been adapted to the type of the detergent used.

### Ageing of the Powder Detergent Compositions

The foam control agents of Example 1-3 have been submitted to ageing conditions in the above described commercial powder detergent for 4 weeks, at a temperature of 35°C, and 70% relative humidity, which corresponds approximately to a storage of one year at room temperature.

### Testing of the release in the washing cycle

In a conventional automatic front-loading washing machine having a transparent loading door, a wash cycle was carried out with each of the lots prepared as described above, after ageing. A wash cycle was carried out at respectively 95°C (testing condition A) or 40°C (testing condition C). Testing condition B relates to a wash cycle at 95°C with no load.

The door of the washing machine was divided in its height by a scale from 0 to 100, with regular intervals. The foam height during the wash cycle was recorded for each of the samples with and without ageing, when the rotation of the drum of the washing machine was stationary.

In all Examples, a wash cycle of 60 minutes was used. Higher values indicate a higher foam level in the machine and thus worse performance of the foam control agent. In the examples of table 1 the foam level was measured up to the subsequent rinse cycle.

### Results

In table 1, the foam control properties of the foam control agent of comparative example I are compared with the foam control properties of the foam control agent of example 1, 2 and 3, when mixed with a detergent of type A. A wash cycle was carried out at 95°C.

In table 2, the foam control properties of the foam control agent of example 3 are compared with those of the foam control agent of comparative example I, for different types of detergents, and different washing conditions, as set out here above.

From the results summarised in Table 1 it can be seen that with the foam control agent of the present invention, foam formation can be controlled from the beginning, during substantially the whole wash cycle, even into the rinse cycle. With the foam control agent known from the art on the other hand, a satisfactory control of the foam level can only be achieved in the beginning of the wash cycle, during the first halve. In the second halve of the wash cycle however, the foam level becomes unsatisfactory high.

From the results shown in Table 1 it can also be seen that, although the foam control agent contains less antifoam than the foam control agent known from the art, an improved control of the foam formation can be achieved during substantially the entire wash cycle, and even into the rinse cycle.

Table 2 shows that for varying powder detergents and wash conditions, the foam control agent of the present invention allows to control foam formation during substantially the whole wash cycle, whereas with the known foam control agent, foam control becomes unsatisfactory towards the end of the wash cycle.

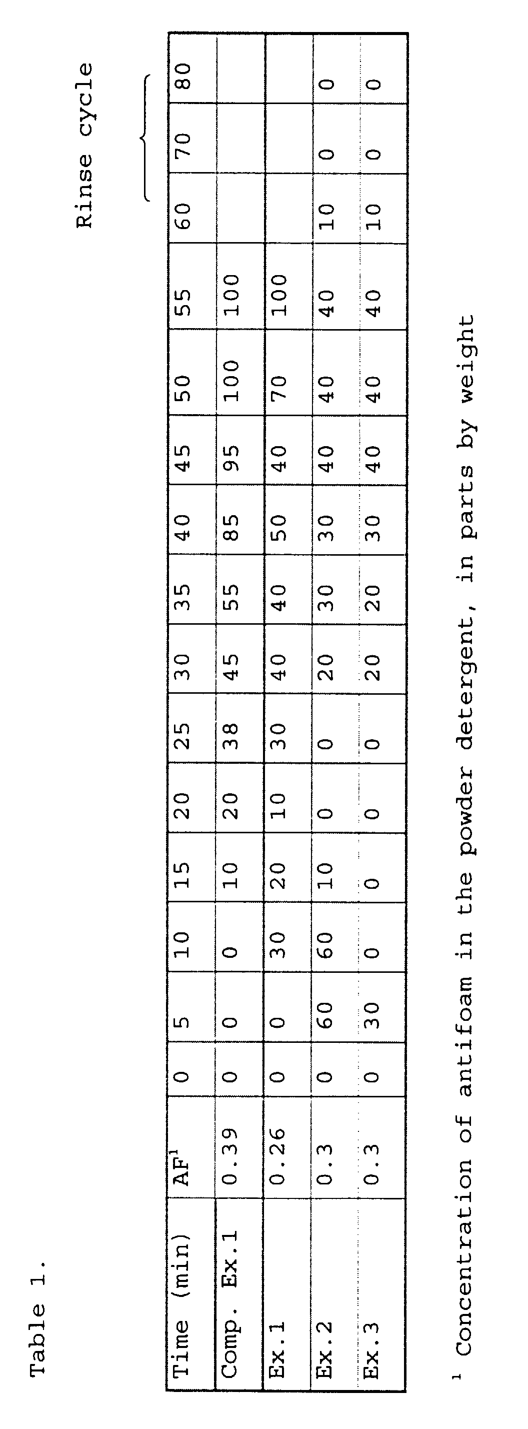

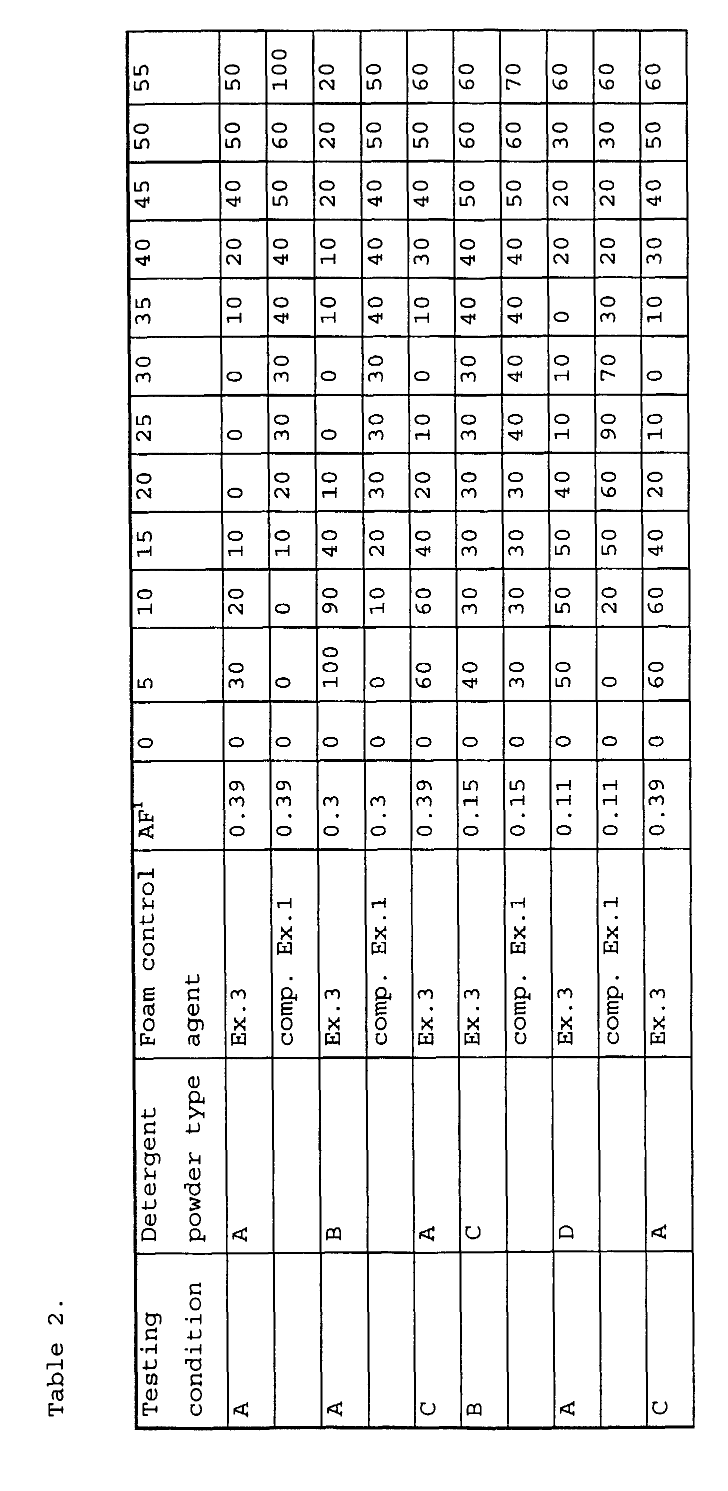

## Claims

1. A particulate foam control agent comprising a silicone antifoam, a zeolite carrier, a surfactant and a binder or encapsulant, characterised in that said binder is a binder system comprising a first binder which is film forming, soluble in an aqueous alkaline solution and solid at 25°C, and a second binder, which is solid at 25°C and soluble or self-emulsifiable in an aqueous alkaline solution, said first binder being more readily soluble in the aqueous alkaline solution than the second binder.

2. A particulate foam control agent as claimed in claim 1, characterised in that it comprises particles having deposited thereon both said first and said second binder.

3. A particulate foam control agent as claimed in claim 1 or 2, characterised in that said binder system comprises at least one additional binder.

4. A particulate foam control agent as claimed in any one of the preceding claims, characterised in that the first binder is selected from polycarboxylate, starch derivatives, polyvinyl alcohol and polyvinyl pyrollidone.

5. A particulate foam control agent as claimed in any one of claims 1-4, characterised in that at least one of said binders is a surface active material.

6. A particulate foam control agent as claimed in claim 5, characterised in that said at least one binder is chosen from the group comprising polycarboxylates, ethoxylated waxes and alcohol ethoxylates.

7. A detergent composition comprising a particulate foam control agent as claimed in any one of claims 1 to 6.

8. A method of providing a particulate foam control agent, characterised in that said method comprises preparing a mixture of a silicone antifoam, a surfactant, a first binder which is film forming, soluble in an aqueous alkaline solution and solid at 25°C, and a second binder which is solid at 25°C and soluble or self-emulsifiable in an aqueous alkaline solution, said first binder being more readily soluble in the aqueous alkaline solution than the second binder, and depositing said mixture onto a zeolite carrier, whereby the silicone antifoam is not deposited onto the zeolite surface prior to the deposition of the surfactant.
